# EUROPEAN PATENT SPECIFICATION

(11) **EP 4 038 322 B1**
(45) Date of publication and mention of the grant of the patent: **27.03.2024**
(21) Application number: 20793148.6
(22) Date of filing: 01.10.2020
(51) Int. Cl.: F24F 11/62, F24F 11/64, F24F 11/65, G05B 15/02

(54) **DEVICE AND METHOD FOR REGULATING A HEATING AND/OR COOLING SYSTEM**
VORRICHTUNG UND VERFAHREN ZUR REGELUNG EINES HEIZ- UND/ODER KÜHLSYSTEMS
DISPOSITIF ET PROCEDE DE REGULATION D'UN SYSTEME DE CHAUFFAGE ET/OU DE REFROIDISSEMENT

(30) Priority: 04.10.2019 IT 201900018002
(43) Date of publication of application: 10.08.2022
(73) Proprietor: Enerbrain S.r.l., 10126 Torino (TO) (IT)
(72) Inventor: MARTELLACCI, Marco, 10125 Torino (TO) (IT)
(74) Representative: Metroconsult Srl
(86) International application number: PCT/IB2020/059200
(87) International publication number: WO 2021/064628

(56) References cited:
- EP-A1- 3 211 340
- EP-A1- 3 351 862
- CN-A- 103 292 434
- US-B2- 10 364 997

## Description

The present invention relates to a device for regulating a heating and/or cooling system, in accordance with the preamble of claim 1. In particular, it illustrates a device and a method for regulating heating and/or cooling systems for buildings, in order to maintain comfortable environmental conditions while improving the energy performance. The invention also relates to a heating and/or cooling system, e.g. rooftop systems, etc.

Optimization of environmental comfort in buildings is a subject that is currently gaining increasing importance. The scientific literature includes a considerable number of research works that show how several comfort-related aspects, particularly thermal performance and air quality, are directly proportional to the physical wellness of the occupants and, in work environments, to their productivity.

The European UNI EN 15232-1:2017 standard identifies open-loop regulation as the standard case for designing Building Automation and Control Systems (BACS). Said standard specifies building control, automation and management functions, classifies and defines the technical requirements of such functions, and estimates the impact thereof upon energy performance. In particular, it estimates that switching from standard minimum system regulation functions (defined as Class C in the specification) to advanced regulation functions (Class A) leads to an energy saving of up to 50% in non-residential buildings and approximately 20% in residential buildings.

With standard open-loop regulation (Class C), heating and/or cooling systems regulate the operation of the generation and distribution systems according to the outdoor temperature. In thermo-fluidic systems, for example, at generation level the temperature of the water delivered to the circuit is changed on the basis of outdoor temperature data, communicated to the system by temperature sensors. The power of a traditional boiler, for example, is typically regulated according to an outdoor temperature compensation curve: with an outdoor temperature of 0°C, the water is heated to 80 °C; with an outdoor temperature of 12 °C, the water is heated to 60 °C. At distribution level, the hot/cold water produced by the generation system is mixed with recirculation water, so as to deliver to the building distribution system water at a temperature determined as a function of the outdoor temperature. In this case, the generation system requires the presence of an external temperature sensor and a mixing valve downstream of the water generation stage and upstream of the water distribution stage in the building distribution system.

The variation in the system control logics necessary for reaching Class A as defined by the UNI EN 15232-1:2017 standard, i.e. high energetic efficiency, assumes that the generation and distribution system are controlled on the basis of the actual demand of the building, thus obtaining a closed-loop regulation, wherein the indoor environmental conditions are both a result and an input of the system management. According to said standard, switching from Class C (open-loop) regulation to Class A (closed-loop) regulation for heating and cooling systems results in significant energy savings, which may vary depending on the building type and the load profiles. It has been estimated that, for example, in office buildings Class A control logics ensure an energy saving of 30% for heating and 43% for cooling.

Although modern thermal systems implement advanced integrated control and regulation systems, most of the existing buildings are equipped with systems regulated according to control logics based on standard values as opposed to the actual requirements of the environment (open-loop control), with potentially adverse effects on the indoor environmental conditions and also on the energetic efficiency of the system. Depending on the designated use of the building, the type of system installed, and the times and modes of occupation, there are several options available for controlling the environmental parameters. However, maintaining in an environment desired values of parameters such as temperature, humidity and pollutant concentration is neither simple nor cheap when using current control systems. Notwithstanding its high energy saving potential, closed-loop control (Class A) is not typically implemented in existing systems, because changes to existing control logics would require complex and costly upgrades on the already installed control units of the system.

Document US 10,364,997 B2 describes a controller including a communications interface configured to provide a control input to and receive feedback from a plant. The feedback is representative of a response of the plant to the control input over a response period. The controller further includes a time constant estimator. The time constant estimator calculates a normalized variable based on the feedback, each value of the normalized variable representative of the response of the plant at a different time during the response period. The time constant estimator calculates a plurality of time constant estimates, based on the plurality of values of the normalized variable. The time constant estimator determines a maximum time constant from the time constant estimates. The controller further includes a control input generator that generates the control input for the plant using the maximum time constant. The control input affects a variable state or condition of the plant.

Document EP 3 351 862 A1 describes a heating, ventilation, or air conditioning (HVAC) system for a building including a chiller, a heat exchanger separate from the chiller, and a controller. The chiller is configured to provide mechanical cooling for a cooling load in the building when the HVAC system operates in a mechanical cooling state. The heat exchanger is configured to provide free cooling for the cooling load in the building when the HVAC system operates in a free cooling state. The controller is configured to predict outside air temperature and transition the HVAC system from operating in the mechanical cooling state to operating in the free cooling state in response to a determination that the predicted outside air temperature will be less than the free cooling temperature threshold for at least the minimum free cooling time.

European patent application no. EP3211340 by the present Applicant concerns an electronic device and a method for regulating thermo-fluidic systems for buildings. Such device acts upon the distribution system of the installation, operating a closed-loop regulation of the mixing valves downstream of the generation system.

The energy management systems known in the art suffer from a number of drawbacks, which will be illustrated below.

A first drawback is related to the fact that there is no closed-loop control system for the generation system of the installation, resulting in higher energy consumption of the generation system.

Another drawback is related to the fact that the closed-loop control of the distribution system is not integrated with the generation system in the installation.

It is therefore one object of the present invention to solve these and other problems of the prior art, and in particular to provide a device for regulating a heating and/or cooling system, and a related method, which permit using a closed-loop control system for the generation system of the installation, so as to reduce the energy consumption thereof.

It is a further object of the present invention to provide a device for regulating a heating and/or cooling system, and a related method, which permit integrating the closed-loop control of the distribution system with the generation system of the installation.

It is a further object of the present invention to provide a device for regulating a heating and/or cooling system, and a related method, which make it possible to simplify the switching from less performing control logics (typically Class C or lower) to Class A control logics for any type of building, thereby attaining the estimated energy saving potential. The invention described herein consists of a device for regulating a heating and/or cooling system, and a related method, which allows communicating with the generation system of the installation, e.g. boilers, refrigerators, heat pumps, rooftops and so on, and modulating the power thereof in real time.

Further advantageous features of the present invention are set out in the appended claims, which are an integral part of the present disclosure.

The invention will now be described in detail through some non-limiting exemplary embodiments with particular reference to the annexed drawings, wherein:
- Figure 1 schematically shows an example of a heating and/or cooling system comprising a device for regulating such system, according to an embodiment of the present invention;
- Figure 2 shows an illustrative block diagram of the device for regulating the system of Figure 1;
- Figure 3 shows an illustrative block diagram of the operations executed by the device of Figure 2;
- Figure 4 shows an illustrative flow chart of a method for regulating heating and/or cooling systems implemented by the system of Figure 1.

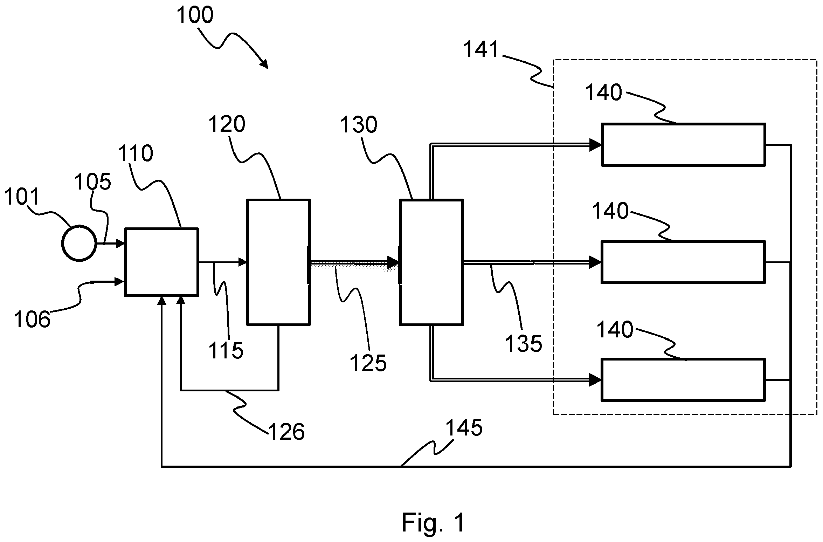

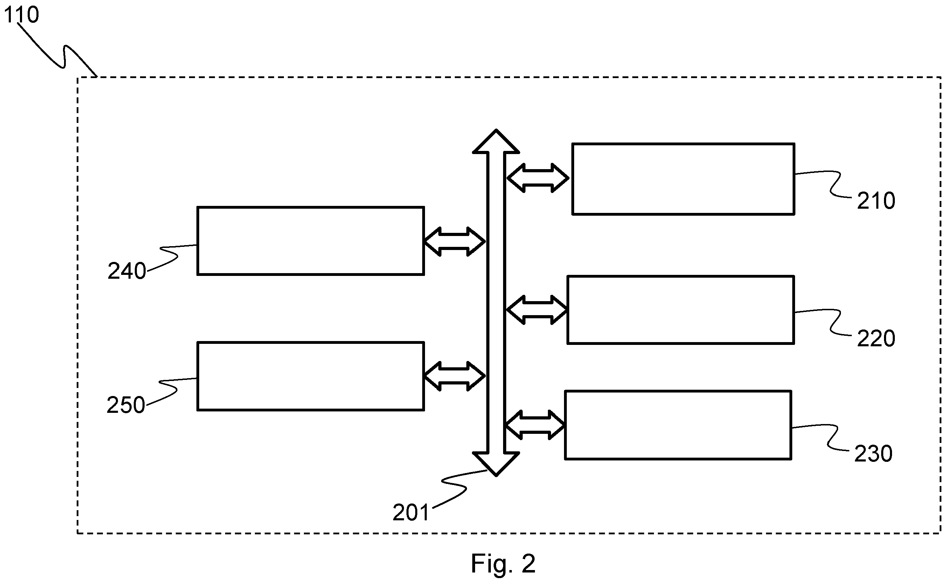

With reference to Figure 1, there is schematically shown a heating and/or cooling system 100 serving a building 141, e.g. a jointly-owned building, a gymnasium, a shopping centre, a factory, a warehouse, etc., said building 141 comprising at least one environment 140. The system 100 comprises a management system 101, a generation system 120 and a distribution system 130. The generation system 120, the distribution system 130 and at least one environment 140 of the building 141 are operationally connected by means of first ducts 125 and second ducts 135, e.g. pipes, for transporting a heat transfer fluid, e.g. distilled water. The system 100 is adapted to heat or cool one or more environments 140 of the building 141 according to the closed-loop paradigm (Class A), by using at least one device 110 for regulating such system 100 in accordance with the present invention, which will be described in detail with reference to Figure 2.

The management system 101 is adapted to manage the system 100 according to the open-loop paradigm (Class C). According to such paradigm, the management system 101 generates a main signal 105, which may be, for example, an electric voltage value in the range of 0 to 10 V. The main signal 105 is generated by the management system 101 on the basis of predefined (standard) values, which may depend on the physical characteristics of the environment 140 to be heated or cooled, such as, for example, the thermal capacity, the heat transfer coefficient of the environment 140, etc. The management system 101 may be, for example, a Building Management System (BMS), and may be implemented by a computer and/or an electronic device specifically designed for managing the system 100 according to the open-loop paradigm.

The device 110 of the present invention is operationally connected between said management system 101 and said generation system 120, and makes it possible to control the system 100 according to the closed-loop paradigm (Class A). Said device 110 is adapted to:
- receive the main signal 105 from the management system 101;
- receive at least one reference signal 106 representative of a desired parameter for said building 141;
- receive at least one environmental signal 145 representative of at least one parameter related to said building 141;
- receive a control unit signal 126 representative of a parameter related to the generation system 120.

The reference signal 106 may be, for example, an electric voltage value preferably representative of a temperature value, e.g. set by a user of the building 141.

The environmental signal 145 may be, for example, an electric voltage value representative of at least one environmental parameter related to at least one environment 140 of the building 141. Said at least one environmental parameter may be, for example, a value of temperature, relative humidity, carbon dioxide level, etc., measured by sensor means located in the building 141. The sensor means may be, for example, thermocouples, thermal resistors, etc.

The control unit signal 126 may be, for example, an electric voltage value representative of at least one parameter related to the generation system 120, such as, for example, at least one temperature and/or pressure value of the heat transfer fluid, measured by sensor means located in the generation system 120.

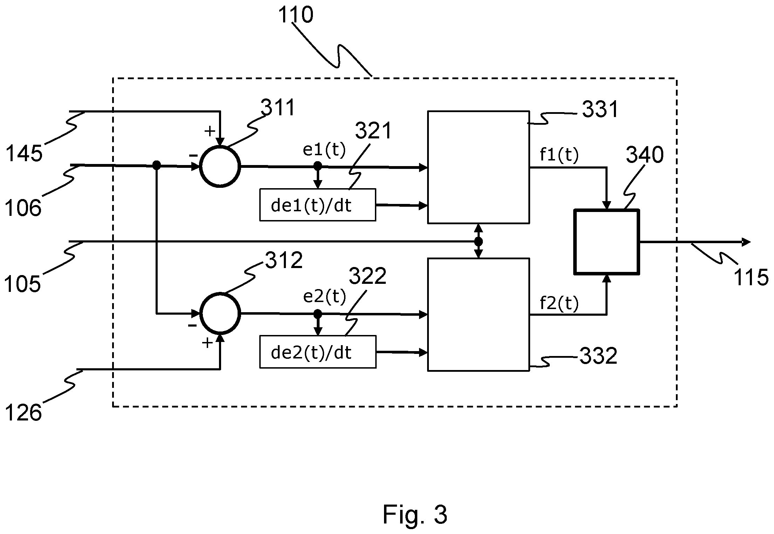

The device 110 is adapted to output a control signal 115 for the generation system 120. The control signal 115 may be, for example, an electric voltage value, e.g. from 0 to 10 V. The control signal 115 is determined by procedures comprising at least one fuzzy logic algorithm, which will be described in detail with reference to Figure 3, on the basis of the main signal 105, the reference signal 106, at least one environmental signal 145 and the control unit signal 126. The control signal 115 is sent to the generation system 120 in order to effectively regulate the power thereof, and hence the heat transfer fluid delivery temperature, as a function of the main signal 105, the reference signal 106, at least one environmental signal 145 and the control unit signal 126.

In this manner, the device 110 advantageously makes it possible to modulate the power of the generation system 120 according to the actual instantaneous thermal load requirements, thus ensuring a high percent increase in the efficiency of the system 100. It is also clear that, without said device 110 in the system 100, the main signal 105 outputted by the management system 101 would be directly inputted to the generation system 120, thus disadvantageously implementing a control of the system 109 according to the open-loop paradigm, which is less efficient than the control according to the closed-loop paradigm described in the present invention.

The generation system 120 is adapted to generate a heat flow for heating or cooling the building 141, e.g. through the use of boilers, refrigerators, heat pump, rooftops, and so forth.

The heat flow is generated by using energy in accordance with the control signal 115 inputted to the generation system 120. For example, when the system 100 is adapted to heat the building 141, the generation system may comprise a boiler. The boiler may comprise, for example, a burner and a tank containing the heat transfer fluid, e.g. distilled water. The burner is adapted to heat the heat transfer fluid in the tank, until it reaches a given temperature determined on the basis of the control signal 115. To this end, the burner may use fuel such as liquid propane gas, methane, etc. The generation system 120 is adapted to deliver the heat transfer fluid, suitably heated, to the distribution system 130 by means of said first ducts 125.

When the system 100 is adapted to cool the building 141, the generation system may comprise a refrigerator, which is adapted to cool the heat transfer fluid until it reaches a given temperature determined on the basis of the control signal 115. The generation system 120 is adapted to deliver the heat transfer fluid, suitably cooled, to the distribution system 130 by means of said first ducts 125.

The distribution system 130 is adapted to distribute the heat flow exiting the generation system 120 for heating or cooling the building 141. The distribution system 130 may comprise pumps, ducts, valves controllable by the management system 101. The heat flow exiting said distribution system 130 is conveyed towards one or more environments 140 of the building 141 by means of said second ducts 135. Each environment 140 may comprise one or more apparatuses adapted to exchange the heat flow received from the distribution system 130, said apparatuses being, for example, radiators, conditioners, etc.

In another embodiment, the distribution system 130 may comprise pumps, ducts, valves controllable in accordance with the invention discussed in the above-mentioned European patent application no. EP3211340.

Figure 2 shows an illustrative block diagram of the device 110 for regulating the system 100, with reference to the system of Figure 1. Said device 110 may comprise interfacing means 210, communication means 220, user interface means 230, memory means 240 and processing means 250. Such means may be interconnected via a communication bus 201.

The interfacing means 210 are adapted to establish at least one communication channel with said management system 101, generation system 120, distribution system and at least one environment 140, so as to receive the main signal 105, the reference signal 106, at least one environmental signal 145 and the control unit signal 126, as well as to transmit the control signal 115. Said interfacing means 210 may comprise, for example, a MODBUS, BACNET, MBUS, CANBUS, RS232, RS485 interface, or an analogue and/or digital interface adapted to use, for example, an electric voltage or current signal.

The communication means 220 are adapted to send the information processed by the device 110 to a device external to the device 110, such as, for example, a communication unit of the management system 101, and/or to a remote server. Said communication means 220 may comprise, for example, an ETHERNET interface, a WiFi interface, a GSM interface, and so forth. Said communication means 220 may establish a connection to a remote apparatus, e.g. a smartphone, a tablet, etc., for managing and monitoring the system 100.

The user interface means 230 allow a user to interact with the device 110. They may comprise output and input means, e.g. a display and an alphanumerical keyboard, respectively, or, alternatively, a touchscreen displaying an alphanumerical keyboard and interactive symbols. In another embodiment of the invention, the user interface means 230 may comprise a communication interface for communicating with a terminal external to the device 110, e.g. an RS232, USB, etc. interface. The terminal external to the device 120 may be, for example, a smartphone controlled by a user or an operator.

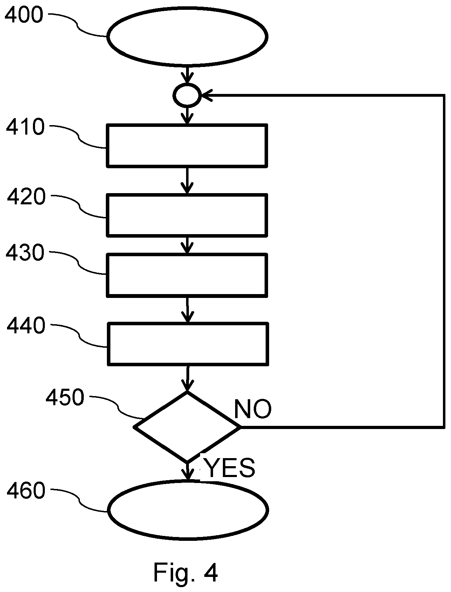

The memory means 240 allow storing the information received by the device 110 and the instructions implementing the present embodiment of the invention; the memory means 240 may comprise, for example, a flash-type solid-state memory. The information may comprise a set of values and/or parameters useful for regulating the system 100, e.g. the operating state of the generation system 120 and/or of said distribution system and/or values of several physical quantities, e.g. values of temperature, electric current, electric voltage, etc., related to the generation system 120, the distribution system, and at least one environment 140. The instructions stored in the memory means 240 will be described in detail below with reference to the flow chart of Figure 4.

The processing means 250 allow processing the information and the instructions stored in the memory means 240, and may comprise, for example, an ARM processor, an Arduino microcontroller, etc.

With reference to Figure 3, the following will describe an illustrative block diagram of the operations executed by the device 110 of Figure 2, in particular during the temperature regulation process, for regulating the temperature of the building 141.

The device 110 is adapted to implement the regulation process, which is based on fuzzy, fuzzy PID like or, optionally, fuzzy PID algorithms, as a function of the main signal 105, the reference signal 106, at least one environmental signal 145 and the control unit signal 126. Unlike Boolean logic, fuzzy algorithms, also known as many-valued logic algorithms, are capable of treating ambiguous, imprecise, not exactly defined contexts. Contrary to Boolean logic, which is based on two truth values, i.e. true or false (1 or 0), in fuzzy logic the truth value of a variable may be partially true or partially false, and not necessarily wholly true or wholly false; consequently, the truth value of a variable is quantified as a number comprised between 0 and 1. Fuzzy logic permits achieving the regulation of a system via formalization of concepts derived from common experience. The performance of these types of regulation algorithms are good, without requiring a complex mathematical modelling of the controlled system. Fuzzy logic does not require the estimation of parameters that are often difficult to determine in systems like those described within the scope of the present invention.

In accordance with Figure 3, the reference signal 106, e.g. representative of a user-defined reference temperature value Tr, is received by the device 110 via, for example, said interfacing means 210. Said processing means 250 are configured to execute a difference operation, represented by the sum block 311. The processing means 250 then determine the error e1(t) between said environmental signal 145, representative of an indoor temperature Ti of the building 141, e.g. measured by a thermal resistor, and the reference signal 106. The processing means 250 are configured to execute a derivation operation de1(t)/dt on the error e1(t), represented by the derivation block 321. The processing means 250 are then configured to execute a first fuzzy controller block 331, which receives as input the error e1(t), its first derivative de1(t)/dt and the main signal 105 received by the device 110, e.g. via said interfacing means 210. The processing means 250 then generate a fuzzy value f1(t), as output of the first fuzzy controller block 331, on the basis of at least one fuzzy logic implication. Similarly, said processing means 250 are further configured to execute a difference operation represented by the sum block 312. The processing means 250 then determine the error e2(t) between the control unit signal 126, e.g. representative of a temperature of the heat transfer fluid Tv of the generation system 120, e.g. measured by a thermocouple, and the reference signal 106. The processing means 250 are configured to execute a derivation operation de2(t)/dt on the error e2(t), represented by the derivation block 322. The processing means 250 are then configured to execute a second fuzzy controller block 332, which receives as input the error e2(t), its first derivative de2(t)/dt and the main signal 105 received by the device 110, e.g. via said interfacing means 210. The processing means 250 then generate a fuzzy value f2(t), as output of the second fuzzy controller block 332, on the basis of at least one fuzzy logic implication.

The fuzzy implication realized by said first fuzzy controller block 331 and second fuzzy controller block 332 is not an object of the present invention, and is determined on the basis of algorithms known in the literature, as described, for example, in the article "Design and simulation of self-tuning PID-type fuzzy adaptive control for an expert HVAC system" by Servet Soyguder, Mehmet Karakose, Hasan Alli, ELSEVIER, Expert Systems with Applications 36 (2009) 4566-4573, or the article "Self-Tuning Fuzzy PI Controller and its Application to HVAC Systems" by A. K. Pal and R. K. Mudi, INTERNATIONAL JOURNAL OF COMPUTATIONAL COGNITION (HTTP://WWW.IJCC.US), VOL. 6, NO. 1, MARCH 2008.

In the present embodiment of the invention, said first fuzzy controller block 331 and second fuzzy controller block 332 may realize equivalent or, alternatively, non-equivalent fuzzy logics.

According to the invention the processing means 250 are configured to make a selection, represented by the selection block 340, of one fuzzy value among two or more fuzzy values f1(t), f2(t) according to a predefined criterion, preferably by selecting the highest value among said fuzzy values f1(t), f2(t).

The processing means 250 are configured to output from the selection block 340, via said interfacing means 210, the control signal 115 for the generation system 120. It is apparent from the present description that the control signal 115 is determined on the basis of the main signal 105, the reference signal 106, at least one environmental signal 145 and the control unit signal 126.

In other embodiments of the invention, the functional diagram comprising the sum block 311, 312, the derivation block 321, 322 and the first and second fuzzy controller blocks 331, 332 may be replicated according to the number of signals inputted to the device 110, so as to generate more than two fuzzy values f1(t), f2(t).

In a further embodiment of the invention, the operations described with reference to Figure 3 may be carried out by said remote server operationally communicating with the device 110.

As illustrated in Figure 4, the following will describe an exemplary method for regulating the heating and/or cooling system 100, with reference to the device 110 of Figure 2 and the block diagram of Figure 3.

At step 400, a step of initializing the device 110 is carried out in order to bring it into an operational condition. During this step, for example, the processing means 250 verify the operating state of the device 110.

At step 410, the processing means 250 are configured to execute a reception step. During this step, the processing means 250 receive, via said interface means 210:
- the main signal 105 from said management system 101;
- at least one reference signal 106 representative of a desired parameter for said building 141;
- at least one environmental signal 145 representative of at least one parameter related to said building 141;
- the control unit signal 126 representative of a parameter related to the generation system 120.

During this step, the information of said main signal 105, at least one reference signal 106, at least one environmental signal 145 and control unit signal 126 may be stored, at least partly, into the memory means 240, to be then processed by the processing means 250, e.g. in order to identify any fault in the system 100.

At step 420, the processing means 250 are configured to execute a fuzzy generation step. During this step, the processing means 250 generate two or more fuzzy values f1(t), f2(t) based on at least one fuzzy logic implication, as a function of the main signal 105, the reference signal 106, at least one environmental signal 145 and the control unit signal 126, as described by way of example with reference to Figure 3.

At step 430, the processing means 250 are configured to execute a selection step. During this step, the processing means 250 select one fuzzy value among said two or more fuzzy values f1(t), f2(t), generated at step 420, according to a predefined criterion, preferably the highest value among said fuzzy values f1(t), f2(t).

At step 440, the processing means 250 are configured to execute an output step. During this step, the processing means 250 output, as a result of said selection step described at step 430, via said interfacing means 210, the control signal 115 for the generation system 120. It is clear that the control signal 115 is determined on the basis of the main signal 105, the reference signal 106, at least one environmental signal 145 and the control unit signal 126.

At step 450, the processing means 250 verify if said reception, generation, selection and output steps should terminated, e.g. because an error occurred during at least one of said reception, generation, selection and output steps. If so, the processing means 250 will execute step 460, otherwise they will execute step 410.

At step 460, the processing means 250 execute all those operations which are necessary for terminating said reception, generation, selection and output steps. During this step, the processing means 250 may signal the inoperative state of the device 110, e.g. by means of luminous indicators, such as LED warning lights included in the device 110 itself.

The advantages of the present invention are apparent from the above description.

The device for regulating a heating and/or cooling system and the related method of the present invention advantageously permit implementing the closed-loop control paradigm in a system originally designed according to the open-loop paradigm, by means of sensors that can be easily installed in the system.

A further advantage of the present invention is that it converts a heating and/or cooling system operating according to the open-loop paradigm into a system operating according to the closed-loop paradigm while advantageously simplifying the system upgrade process, thus reducing the costs thereof, through the installation of sensors in the system and the use of the device of the present invention.

Of course, without prejudice to the principle of the present invention, the forms of embodiment and the implementation details may be extensively varied from those described and illustrated herein merely by way of non-limiting example, without however departing from the protection scope of the present invention as set out in the appended claims.

## Claims

1. Device (110) for regulating a heating and/or cooling system (100) serving a building (141), said system (100) comprising a management system (101) and a generation system (120), said device (110) being adapted to:
- receive a main signal (105) from said management system (101);
- receive at least one reference signal (106) representative of a desired parameter for said building (141);
- receive at least one environmental signal (145) representative of at least one parameter related to said building (141),
- receive a control unit signal (126) representative of a parameter related to the generation system (120),
- output a control signal (115) for said generation system (120),
said control signal (115) being determined on the basis of said main signal (105), said reference signal (106), said at least one environmental signal (145) and said control unit signal (126),
said device being **characterised in that** it comprises processing means (250) adapted to generate two or more fuzzy values (f1(t), f2(t)) based on at least one fuzzy logic implication, as a function of said main signal (105), said reference signal (106), said at least one environmental signal (145) and said control unit signal (126) and **in that** said processing means (250) are configured to make a selection of one fuzzy value among said two or more fuzzy values (f1(t), f2(t)) according to a predefined criterion and to output the control signal (115) for the generation system (120).

2. Device (110) according to claim 1, wherein said processing means (250) are configured to select the highest value among said fuzzy values (f1(t), f2(t)).

3. Device (110) according to one or more of claims 1 to 2, wherein said device (110) is operationally connected between said management system (101) and said generation system (120), and is adapted to regulate said system (100) according to a closed-loop paradigm.

4. Device (110) according to one or more of claims 1 to 3, wherein said main signal (105) is generated by the management system (101) on the basis of predefined values.

5. Device (110) according to one or more of claims 1 to 3, wherein said reference signal (106) is an electric voltage value preferably representative of a temperature value.

6. Device (110) according to one or more of claims 1 to 3, wherein said environmental signal (145) is an electric voltage value representative of at least one environmental parameter related to at least one environment (140) of said building (141), said at least one environmental parameter being a value of temperature, relative humidity, carbon dioxide level.

7. Device (110) according to one or more of claims 1 to 3, wherein said control unit signal (126) is an electric voltage value representative of at least one temperature and/or pressure value of a heat transfer fluid.

8. Heating and/or cooling system (100) serving a building (141), said system (100) comprising a management system (101), a generation system (120) and a device (110), said device (110) being adapted to:
- receive a main signal (105) from said management system (101);
- receive at least one reference signal (106) representative of a desired parameter for said building (141);
- receive at least one environmental signal (145) representative of at least one parameter related to said building (141),
- receive a control unit signal (126) representative of a parameter related to the generation system (120),
- output a control signal (115) for said generation system (120),
said control signal (115) being determined on the basis of said main signal (105), said reference signal (106), said at least one environmental signal (145) and said control unit signal (126),
said system being **characterised in that** said device (110) comprises processing means (250) adapted to generate two or more fuzzy values (f1(t), f2(t)) based on at least one fuzzy logic implication, as a function of said main signal (105), said reference signal (106), said at least one environmental signal (145) and said control unit signal (126) and **in that** said processing means (250) are configured to make a selection of one fuzzy value among said two or more fuzzy values (f1(t), f2(t)) according to a predefined criterion and to output the control signal (115) for the generation system (120).

9. Heating and/or cooling system (100) according to claim 8, wherein said processing means (250) are configured to select the highest value among said fuzzy values (f1(t), f2(t)).

10. Heating and/or cooling system (100) according to one or more of claims 8 and 9, wherein said processing means (250) are configured to output, after said selection, said control signal (115).

11. Heating and/or cooling system (100) according to one or more of claims 8 to 10, wherein said device (110) is operationally connected between said management system (101) and said generation system (120), said device (110) being adapted to regulate said system (100) according to a closed-loop paradigm.

12. Method for regulating a heating and/or cooling system (100) serving a building (141), said system (100) comprising a management system (101), a generation system (120) and a device (110) comprising processing means (250) and interfacing means (210), said method comprising a reception step wherein said processing means (250) receive, via said interfacing means (210):
- a main signal (105) from said management system (101);
- at least one reference signal (106) representative of a desired parameter for said building (141);
- at least one environmental signal (145) representative of at least one parameter related to said building (141),
wherein, during said reception step, said processing means (250) receive, via interfacing means (210), a control unit signal (126) representative of a parameter related to the generation system (120),
said method further comprising an output step wherein said processing means (250) output, via said interfacing means (210), a control signal (115) for the generation system (120), said control signal (115) being determined on the basis of said main signal (105), said reference signal (106), said at least one environmental signal (145) and said control unit signal (126), said method being **characterised in** comprising a fuzzy generation step wherein said processing means (250) generate two or more fuzzy values (f1(t), f2(t)) based on at least one fuzzy logic implication, as a function of said main signal (105), said reference signal (106), said at least one environmental signal (145) and said control unit signal (126) and a selection step wherein said processing means (250) select one fuzzy value among said two or more fuzzy values (f1(t), f2(t)) according to a predefined criterion.

13. Method according to claim 12, wherein said processing means (250) select the highest value among said fuzzy values (f1(t), f2(t)).

## Patentansprüche

1. Vorrichtung (110) zum Regeln eines Heiz- und/oder Kühlsystems (100), das ein Gebäude (141) versorgt, wobei das System (100) ein Managementsystem (101) und ein Erzeugungssystem (120) umfasst, wobei die Vorrichtung (110) angepasst ist, um:
- ein Hauptsignal (105) von dem Managementsystem (101) zu empfangen;
- mindestens ein Referenzsignal (106) zu empfangen, das einen gewünschten Parameter für das Gebäude (141) darstellt;
- mindestens ein Umgebungssignal (145) zu empfangen, das für mindestens einen auf das Gebäude (141) bezogenen Parameter repräsentativ ist,
- ein Steuereinheitssignal (126) zu empfangen, das für einen mit dem Erzeugungssystem (120) verbundenen Parameter repräsentativ ist,
- ein Steuersignal (115) für das Erzeugungssystem (120) auszugeben,
wobei das Steuersignal (115) auf der Grundlage des Hauptsignals (105), des Referenzsignals (106), des mindestens einen Umgebungssignals (145) und des Steuereinheitssignals (126) bestimmt wird,
wobei die Vorrichtung **dadurch gekennzeichnet ist, dass** sie Verarbeitungsmittel (250) umfasst, die angepasst sind, um zwei oder mehr Fuzzy-Werte (fl(t), f2(t)) auf der Grundlage von mindestens einer Fuzzy-Logik-Implikation in Abhängigkeit von dem Hauptsignal (105), dem Referenzsignal (106), dem mindestens einen Umgebungssignal (145) und dem Steuereinheitssignal (126) zu erzeugen, und dadurch, dass die Verarbeitungsmittel (250) konfiguriert sind, um eine Auswahl eines Fuzzy-Wertes aus den zwei oder mehreren Fuzzy-Werten (f1(t), f2(t)) gemäß einem vordefinierten Kriterium zu treffen und das Steuersignal (115) für das Erzeugungssystem (120) auszugeben.

2. Vorrichtung (110) nach Anspruch 1, wobei die Verarbeitungsmittel (250) konfiguriert sind, um den höchsten Wert unter den Fuzzy-Werten (f1(t), f2(t)) auszuwählen.

3. Vorrichtung (110) nach einem oder mehreren der Ansprüche 1 bis 2, wobei die Vorrichtung (110) betriebsmäßig zwischen das Managementsystem (101) und das Erzeugungssystem (120) geschaltet und angepasst ist, um das System (100) gemäß einem geschlossenen Regelkreis zu regeln.

4. Vorrichtung (110) nach einem oder mehreren der Ansprüche 1 bis 3, wobei das Hauptsignal (105) von dem Managementsystem (101) auf der Basis von vordefinierten Werten erzeugt wird.

5. Vorrichtung (110) nach einem oder mehreren der Ansprüche 1 bis 3, wobei das Referenzsignal (106) ein elektrischer Spannungswert ist, der vorzugsweise einen Temperaturwert darstellt.

6. Vorrichtung (110) nach einem oder mehreren der Ansprüche 1 bis 3, wobei das Umgebungssignal (145) ein elektrischer Spannungswert ist, der für mindestens einen Umgebungsparameter repräsentativ ist, der sich auf mindestens eine Umgebung (140) des Gebäudes (141) bezieht, wobei der mindestens eine Umgebungsparameter ein Wert der Temperatur, der relativen Luftfeuchtigkeit oder des Kohlendioxidpegels ist.

7. Vorrichtung (110) nach einem oder mehreren der Ansprüche 1 bis 3, wobei das Steuereinheitssignal (126) ein elektrischer Spannungswert ist, der für mindestens einen Temperatur- und/oder Druckwert eines Wärmeträgerfluids repräsentativ ist.

8. Heiz- und/oder Kühlsystem (100), das ein Gebäude (141) versorgt, wobei das System (100) ein Managementsystem (101), ein Erzeugungssystem (120) und eine Vorrichtung (110) umfasst, wobei die Vorrichtung (110) angepasst ist, um:
- ein Hauptsignal (105) von dem Managementsystem (101) zu empfangen;
- mindestens ein Referenzsignal (106) zu empfangen, das einen gewünschten Parameter für das Gebäude (141) darstellt;
- mindestens ein Umgebungssignal (145) zu empfangen, das für mindestens einen auf das Gebäude (141) bezogenen Parameter repräsentativ ist,
- ein Steuereinheitssignal (126) zu empfangen, das für einen mit dem Erzeugungssystem (120) verbundenen Parameter repräsentativ ist,
- ein Steuersignal (115) für das Erzeugungssystem (120) auszugeben,
wobei das Steuersignal (115) auf der Grundlage des Hauptsignals (105), des Referenzsignals (106), des mindestens einen Umgebungssignals (145) und des Steuereinheitssignals (126) bestimmt wird,
wobei das System **dadurch gekennzeichnet ist, dass** die Vorrichtung (110) Verarbeitungsmittel (250) umfasst, die angepasst sind, um zwei oder mehr Fuzzy-Werte (f1(t), f2(t)) auf der Grundlage von mindestens einer Fuzzy-Logik-Implikation in Abhängigkeit von dem Hauptsignal (105), dem Referenzsignal (106), dem mindestens einen Umgebungssignal (145) und dem Steuereinheitssignal (126) zu erzeugen, und dadurch, dass die Verarbeitungsmittel (250) konfiguriert sind, um eine Auswahl eines Fuzzy-Wertes aus den zwei oder mehreren Fuzzy-Werten (f1(t), f2(t)) gemäß einem vordefinierten Kriterium zu treffen und das Steuersignal (115) für das Erzeugungssystem (120) auszugeben.

9. Heiz- und/oder Kühlsystem (100) nach Anspruch 8, wobei die Verarbeitungsmittel (250) konfiguriert sind, um den höchsten Wert unter den Fuzzy-Werten (f1(t), f2(t)) auszuwählen.

10. Heiz- und/oder Kühlsystem (100) nach einem oder mehreren der Ansprüche 8 und 9, wobei die Verarbeitungsmittel (250) konfiguriert sind, um nach der Auswahl das Steuersignal (115) auszugeben.

11. Heiz- und/oder Kühlsystem (100) nach einem oder mehreren der Ansprüche 8 bis 10, wobei die Vorrichtung (110) betriebsmäßig zwischen das Managementsystem (101) und das Erzeugungssystem (120) geschaltet ist, wobei die Vorrichtung (110) dazu angepasst ist, um das System (100) gemäß einem geschlossenen Regelkreis zu regeln.

12. Verfahren zur Regelung eines Heiz- und/oder Kühlsystems (100), das ein Gebäude (141) versorgt, wobei das System (100) ein Managementsystem (101), ein Erzeugungssystem (120) und eine Vorrichtung (110) mit Verarbeitungsmitteln (250) und Schnittstellenmitteln (210) umfasst, wobei das Verfahren einen Empfangsschritt umfasst, bei dem die Verarbeitungsmittel (250) über die Schnittstellenmittel (210) empfangen
- ein Hauptsignal (105) von dem Verwaltungssystem (101);
- mindestens ein Referenzsignal (106), das für einen gewünschten Parameter für das Gebäude (141) repräsentativ ist;
- mindestens ein Umgebungssignal (145), das für mindestens einen auf das Gebäude (141) bezogenen Parameter repräsentativ ist,
wobei während des Empfangsschritts die Verarbeitungsmittel (250) über Schnittstellenmittel (210) ein Steuereinheitssignal (126) empfangen, das für einen mit dem Erzeugungssystem (120) zusammenhängenden Parameter repräsentativ ist,
wobei das Verfahren ferner einen Ausgabeschritt umfasst, bei dem die Verarbeitungsmittel (250) über die Schnittstellenmittel (210) ein Steuersignal (115) für das Erzeugungssystem (120) ausgeben, wobei das Steuersignal (115) auf der Grundlage des Hauptsignals (105), des Referenzsignals (106), des mindestens einen Umgebungssignals (145) und des Steuereinheitssignals (126) bestimmt wird,
wobei das Verfahren **dadurch gekennzeichnet ist, dass** es einen Fuzzy-Erzeugungsschritt, bei dem die Verarbeitungsmittel (250) zwei oder mehr Fuzzy-Werte (f1(t), f2(t)) auf der Grundlage von mindestens einer Fuzzy-Logik-Implikation in Abhängigkeit von dem Hauptsignal (105), dem Referenzsignal (106), dem mindestens einen Umgebungssignal (145) und dem Steuereinheitssignal (126) erzeugt und einen Auswahlschritt umfasst, bei dem die Verarbeitungsmittel (250) einen Fuzzy-Wert aus den zwei oder mehreren Fuzzy-Werten (f1(t), f2(t)) gemäß einem vordefinierten Kriterium auswählen.

13. Verfahren nach Anspruch 12, wobei die Verarbeitungsmittel (250) den höchsten Wert unter den Fuzzy-Werten (f1(t), f2(t)) auswählen.

## Revendications

1. - Dispositif (110) de régulation d'un système de chauffage et/ou de refroidissement (100) desservant un bâtiment (141), ledit système (100) comprenant un système de gestion (101) et un système de génération (120), ledit dispositif (110) étant conçu pour :
- recevoir un signal principal (105) provenant dudit système de gestion (101) ;
- recevoir au moins un signal de référence (106) représentant un paramètre souhaité pour ledit bâtiment (141) ;
- recevoir au moins un signal environnemental (145) représentant au moins un paramètre relatif audit bâtiment (141),
- recevoir un signal d'unité de commande (126) représentant un paramètre relatif au système de génération (120),
- délivrer un signal de commande (115) pour ledit système de génération (120),
ledit signal de commande (115) étant déterminé sur la base dudit signal principal (105), dudit signal de référence (106), dudit au moins un signal environnemental (145) et dudit signal d'unité de commande (126),
ledit dispositif étant **caractérisé par le fait qu'**il comprend des moyens de traitement (250) conçus pour générer au moins deux valeurs floues (f1(t), f2(t)) sur la base d'au moins une implication de logique floue, en fonction dudit signal principal (105), dudit signal de référence (106), dudit au moins un signal environnemental (145) et dudit signal d'unité de commande (126), et **par le fait que** lesdits moyens de traitement (250) sont configurés pour effectuer une sélection d'une valeur floue parmi lesdites au moins deux valeurs floues (f1(t), f2(t)) selon un critère prédéfini et pour délivrer le signal de commande (115) pour le système de génération (120).

2. - Dispositif (110) selon la revendication 1, dans lequel lesdits moyens de traitement (250) sont configurés pour sélectionner la valeur la plus élevée parmi lesdites valeurs floues (f1(t), f2(t)).

3. - Dispositif (110) selon une ou plusieurs des revendications 1 à 2, dans lequel ledit dispositif (110) est connecté de manière fonctionnelle entre ledit système de gestion (101) et ledit système de génération (120), et est conçu pour réguler ledit système (100) selon un paradigme en boucle fermée.

4. - Dispositif (110) selon une ou plusieurs des revendications 1 à 3, dans lequel ledit signal principal (105) est généré par le système de gestion (101) sur la base de valeurs prédéfinies.

5. - Dispositif (110) selon une ou plusieurs des revendications 1 à 3, dans lequel ledit signal de référence (106) est une valeur de tension électrique représentant de préférence une valeur de température.

6. - Dispositif (110) selon une ou plusieurs des revendications 1 à 3, dans lequel ledit signal environnemental (145) est une valeur de tension électrique représentant au moins un paramètre environnemental relatif à au moins un environnement (140) dudit bâtiment (141), ledit au moins un paramètre environnemental étant une valeur de température, d'humidité relative, de taux de dioxyde de carbone.

7. - Dispositif (110) selon une ou plusieurs des revendications 1 à 3, dans lequel ledit signal d'unité de commande (126) est une valeur de tension électrique représentant au moins une valeur de température et/ou de pression d'un fluide caloporteur.

8. - Système de chauffage et/ou de refroidissement (100) desservant un bâtiment (141), ledit système (100) comprenant un système de gestion (101), un système de génération (120) et un dispositif (110), ledit dispositif (110) étant conçu pour :
- recevoir un signal principal (105) provenant dudit système de gestion (101) ;
- recevoir au moins un signal de référence (106) représentant un paramètre souhaité pour ledit bâtiment (141) ;
- recevoir au moins un signal environnemental (145) représentant au moins un paramètre relatif audit bâtiment (141),
- recevoir un signal d'unité de commande (126) représentant un paramètre relatif au système de génération (120),
- délivrer un signal de commande (115) pour ledit système de génération (120),
ledit signal de commande (115) étant déterminé sur la base dudit signal principal (105), dudit signal de référence (106), dudit au moins un signal environnemental (145) et dudit signal d'unité de commande (126),
ledit système étant **caractérisé par le fait que** ledit dispositif (110) comprend des moyens de traitement (250) conçus pour générer au moins deux valeurs floues (f1(t), f2(t)) sur la base d'au moins une implication de logique floue, en fonction dudit signal principal (105), dudit signal de référence (106), dudit au moins un signal environnemental (145) et dudit signal d'unité de commande, et **par le fait que** lesdits moyens de traitement (250) sont configurés pour effectuer une sélection d'une valeur floue parmi lesdites au moins deux valeurs floues (f1(t), f2(t)) selon un critère prédéfini et pour délivrer le signal de commande (115) pour le système de génération (120).

9. - Système de chauffage et/ou de refroidissement (100) selon la revendication 8, dans lequel lesdits moyens de traitement (250) sont configurés pour sélectionner la valeur la plus élevée parmi lesdites valeurs floues (f1(t), f2(t)).

10. - Système de chauffage et/ou de refroidissement (100) selon une ou plusieurs des revendications 8 et 9, dans lequel lesdits moyens de traitement (250) sont configurés pour délivrer, après ladite sélection, ledit signal de commande (115) .

11. - Système de chauffage et/ou de refroidissement (100) selon une ou plusieurs des revendications 8 à 10, dans lequel ledit dispositif (110) est connecté de manière fonctionnelle entre ledit système de gestion (101) et ledit système de génération (120), ledit dispositif (110) étant conçu pour réguler ledit système (100) selon un paradigme en boucle fermée.

12. - Procédé de régulation d'un système de chauffage et/ou de refroidissement (100) desservant un bâtiment (141), ledit système (100) comprenant un système de gestion (101), un système de génération (120) et un dispositif (110) comprenant des moyens de traitement (250) et des moyens d'interfaçage (210), ledit procédé comprenant une étape de réception dans laquelle lesdits moyens de traitement (250) reçoivent, par l'intermédiaire desdits moyens d'interfaçage (210) :
- un signal principal (105) provenant dudit système de gestion (101) ;
- au moins un signal de référence (106) représentant un paramètre souhaité pour ledit bâtiment (141) ;
- au moins un signal environnemental (145) représentant au moins un paramètre relatif audit bâtiment (141),
dans lequel, pendant ladite étape de réception, lesdits moyens de traitement (250) reçoivent, par l'intermédiaire des moyens d'interfaçage (210), un signal d'unité de commande (126) représentant un paramètre relatif au système de génération (120),
ledit procédé comprenant en outre une étape de délivrance dans laquelle lesdits moyens de traitement (250) délivrent, par l'intermédiaire desdits moyens d'interfaçage (210), un signal de commande (115) pour le système de génération (120), ledit signal de commande (115) étant déterminé sur la base dudit signal principal (105), dudit signal de référence (106), dudit au moins un signal environnemental (145) et dudit signal d'unité de commande (126),
ledit procédé étant **caractérisé par le fait qu'**il comprend une étape de génération floue dans laquelle lesdits moyens de traitement (250) génèrent au moins deux valeurs floues (f1(t), f2(t)) sur la base d'au moins une implication de logique floue, en fonction dudit signal principal (105), dudit signal de référence (106), dudit au moins un signal environnemental (145) et dudit signal d'unité de commande (126), et une étape de sélection dans laquelle lesdits moyens de traitement (250) sélectionnent une valeur floue parmi lesdites au moins deux valeurs floues (f1(t), f2(t)) selon un critère prédéfini.

13. - Procédé selon la revendication 12, dans lequel lesdits moyens de traitement (250) sélectionnent la valeur la plus élevée parmi lesdites valeurs floues (f1(t), f2(t)).
